Europäisches Patentamt

European Patent Office

Office européen des brevets

(11) Veröffentlichungsnummer: **0 264 837 B1**

(12) **EUROPÄISCHE PATENTSCHRIFT**

(45) Veröffentlichungstag der Patentschrift: **18.12.91**

(51) Int. Cl.5: **G05B 13/02**, G11B 7/09

(21) Anmeldenummer: **87115121.3**

(22) Anmeldetag: **16.10.87**

(54) **Verfahren und Schaltungsanordnung zur automatischen Einstellung der Regelverstärkung in einem Regelkreis.**

(30) Priorität: **22.10.86 DE 3635859**

(43) Veröffentlichungstag der Anmeldung:
**27.04.88 Patentblatt 88/17**

(45) Bekanntmachung des Hinweises auf die
Patenterteilung:
**18.12.91 Patentblatt 91/51**

(84) Benannte Vertragsstaaten:
**AT BE CH DE ES FR GB IT LI LU NL SE**

(56) Entgegenhaltungen:
**EP-A- 0 155 077**
**DE-A- 3 015 474**
**US-A- 3 250 897**

**PATENT ABSTRACTS OF JAPAN, Band 8, Nr.
97 (P-272)[1534], 8. März 1984; & JP-A-59 8144**

**Decaulne, Gille, Pélegrin, "Introduction aux
systèmes asservis extrémaux et adaptatifs"
(1976), pages 72-85**

(73) Patentinhaber: **Deutsche Thomson-Brandt
GmbH**
**Hermann-Schwer-Strasse 3 Postfach 1307**
**W-7730 Villingen-Schwenningen(DE)**

(72) Erfinder: **Kurz, Arthur**
**Wikingerstrasse 45**
**W-7516 Karlsbad-Langensteinbach(DE)**
Erfinder: **Rohde, Wilfried**
**Fohrenweg 17**
**W-7731 Unterkirnach(DE)**
Erfinder: **Läufer, Engelbert**
**Ginsterweg 40**
**W-7742 St. Georgen(DE)**

## Beschreibung

Die Erfindung betrifft ein Verfahren und eine Schaltungsanordnung zur automatischen Einstellung der Regelverstärkung in einem Regelkreis, indem der Führungsgröße W ein sinusförmiges Signal der Frequenz f überlagert wird, um ein Kriterium zur Einstellung der Regelverstärkung zu gewinnen. Ein solches Verfahren ist in dem weiter unten behandelten Buch von Decaulne u.a. beschrieben.

Regelkreise werden z.B. in CD-Plattenspielern eingesetzt, um die optische Abtastvorrichtung auf der Datenspur der CD-Platte zu führen und um den abtastenden Lichtstrahl auf die Plattenoberfläche zu fokussieren. Diese Servokreise, der Spurregelkreis und der Fokusregelkreis müssen präzise arbeiten und genau eingestellt werden, damit eine einwandfreie Tonwiedergabe erzielt wird. Die Einstellung der Verstärkung bei den Reglern erfolgt in der Regel von Hand durch Verstellen eines Potentiometers. Diese Einstellarbeiten sind relativ aufwendig und nehmen viel Zeit in Anspruch. Weil zudem die in Regelkreisen und der optischen Abtastvorrichtung enthaltenen elektrischen Bauelemente im Laufe der Zeit altern, muß häufig die Verstärkung der Regler von Hand nachgestellt werden. Die Einstellung von Hand sowohl bei der Produktion als auch bei der Wartung der Geräte ist natürlich von Nachteil, weil sie Zeit und damit auch Geld kostet.

Im Buch von Decaulne, Gille, Pe'legrin "Introduction aux systèmes asservis extrémaux et adaptatifs" ist auf der Seite 85 ein adaptiver Regelkreis beschrieben, der in Figur 53 auf derselben Seite abgebildet ist. Von einem solchen Regelkreis geht die Erfindung gemäß dem Oberbegriff des Patentanspruchs 1 aus.

In diesem adaptiven Regelkreis sind eine erste und eine zweite Summationsstelle, ein erster Regelverstärker, eine dritte Summationsstelle sowie die Regelstrecke in Reihe geschaltet. Der Ausgang der Regelstrecke ist mit dem negativen Eingang der zweiten Summationsstelle und mit dem Eingang eines Bandpasses verbunden, dessen Ausgang mit dem Minuseingang eines Amplitudendetektors verbunden ist. Außerdem ist der Ausgang der Regelstrecke über einen regelbaren Verstärker mit dem Minuseingang der dritten Summationsstelle verbunden. Zwei Ausgänge des Bandpasses sind mit dem Minuseingang eines Amplitudendetektors und eines Phasendetektors verbunden, deren Pluseingänge mit dem Ausgang eines Sinusgenerators verbunden sind. Das vom Sinusgenerator erzeugte Sinussignal wird an der ersten Summationsstelle zusammen mit der Führungsgröße e(t) in den Regelkreis eingespeist. Im Amplitudendetektor wird der quadratische Mittelwert aus dem Sinussignal des Sinusgenerators und der gefilterten Regelgröße s(t) gebildet, während der Phasendetektor die Korrelationsfunktion aus dem Sinussignal und der gefilterten Regelgröße erzeugt. Der quadratische Mittelwert dient zur Regelung der Regelverstärkung beim ersten Regelverstärker; die Korrelationsfunktion bestimmt die Regelverstärkung des zweiten Regelverstärkers.

Ein erster Nachteil dieses adaptiven Regelkreises liegt darin, daß zwei Regelverstärker erforderlich sind. Ein zweiter Nachteil ist darin zu sehen, daß zur Einstellung der Regelparameter sowohl der quadratische Mittelwert als auch die Korrelationsfunktion aus dem Sinussignal und der Regelgröße gebildet werden.

Es ist daher Aufgabe der Erfindung, mit einem möglichst geringem Aufwand an Bauteilen die zeitraubenden Einstellarbeiten sowohl bei der Produktion als auch die später bei der Wartung anfallenden Neueinstellungen der Regelverstärkung zu vermeiden.

Die Erfindung, ein Verfahren zur automatischen Einstellung der Regelverstärkung in einem Regelkreis löst diese Aufgabe dadurch, daß die Amplituden der Regelgröße x und der Regeldifferenz $x_d$ miteinander verglichen werden und daß die Regelverstärkung so lange veräudert wird, bis die Amplituden der Regelgröße x und der Regeldifferenz $x_d$ gleich groß sind.

Es zeigen

Figur 1     eine Schaltungsanordnung zur Durchführung des erfindungsgemäßen Verfahrens

Figur 2     eine Ausführung der in Figur 1 gezeigten Schaltungsanordnung für einen CD-Plattenspieler

Figur 3     ein Bode-Diagramm zur Erläuterung der Erfindung.

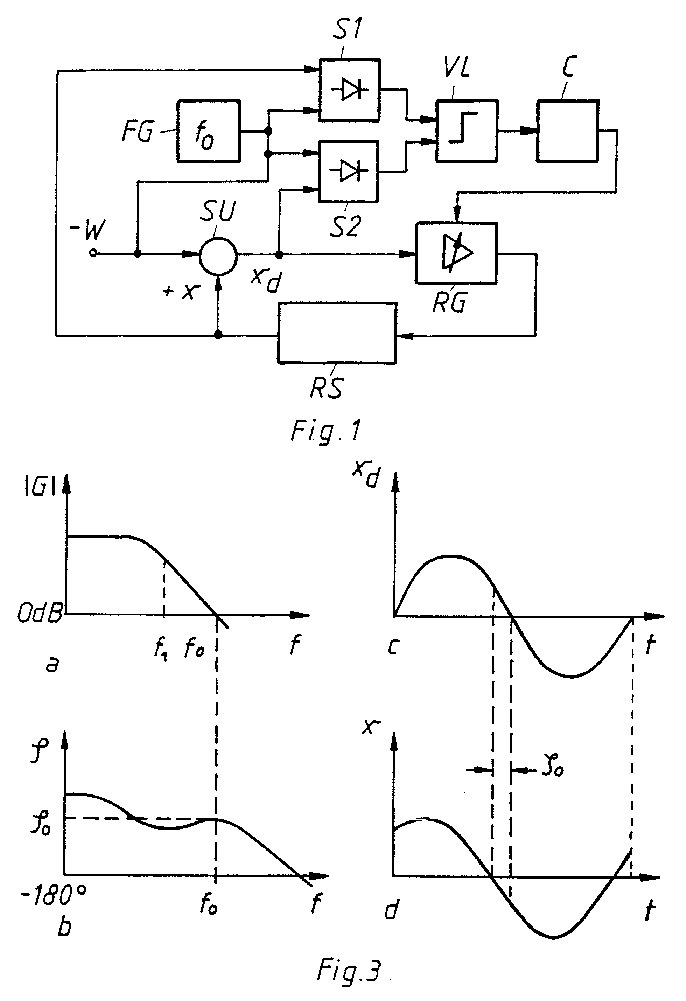

In Figur 1 ist wie bei einem Standard-Regelkreis der Ausgang eines Reglers RG mit dem Eingang der Regelstrecke RS verbunden, deren Ausgang mit dem zweiten Eingang einer Summationsstelle SU verbunden ist. Dem ersten Eingang der Summationsstelle SU wird die Führungsgröße W zugeführt, ihr Ausgang ist mit dem Eingang des Reglers RG verbunden. Der Ausgang eines Frequenzgenerators FG ist mit dem ersten Eingang der Summationsstelle SU, dem ersten Eingang eines ersten Synchrongleichrichters S1 und mit dem ersten Eingang eines zweiten Synchrongleichrichters S2 verbunden. Der zweite Eingang des ersten Synchrongleichrichters S1, dessen Ausgang mit dem ersten Eingang eines Vergleichers VL verbunden ist, ist mit dem Ausgang der Regelstrecke RS, der zweite Eingang des zweiten Synchrongleichrichters S2, dessen Ausgang mit dem zweiten Eingang des Vergleichers VL verbunden ist, ist dagegen mit dem Ausgang der Summationsstelle SU verbunden. Der Ausgang des Vergleichers VL ist mit dem Eingang einer Steuer- und Kontrollschaltung C verbunden, deren Ausgang mit dem Eingang zur Einstellung der Verstärkung am Regler RG verbunden ist.

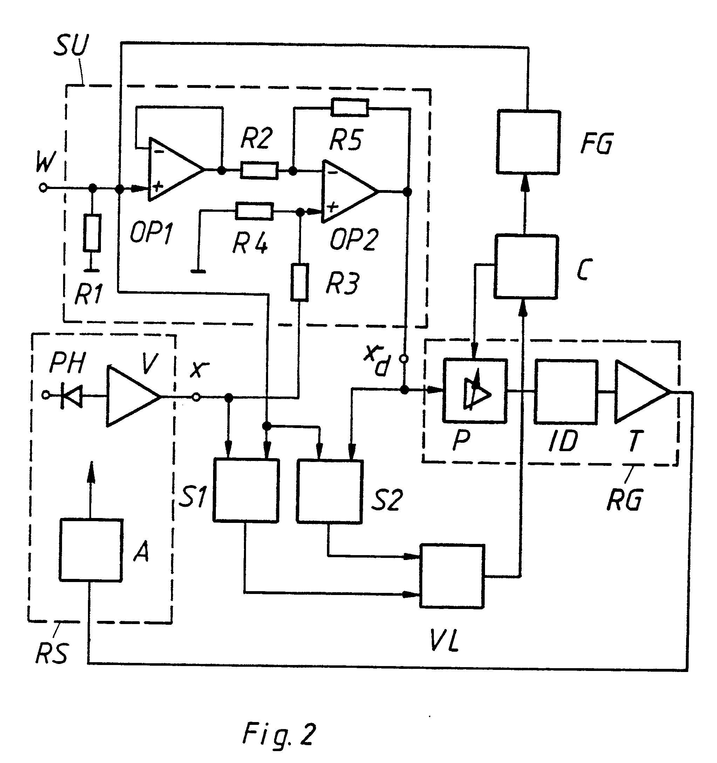

Anhand des in Figur 3 gezeichneten Bode-Diagrammes wird die Schaltungsanordnung aus Figur 2 erläutert.

In Figur 3a ist der Betrag der Regelverstärkung G, auch Schleifenverstärkung genannt, in Figur 3b die Phase $\phi$ über der Frequenz f aufgetragen. Bei der Frequenz $f_o$, der sogenannten kritischen Frequenz, schneidet die Betragskennlinie die Null-dB-Linie. Die Schleifenverstärkung beträgt bei der Frequenz $f_o$ genau eins, die Phasenreserve ergibt sich zu $\phi_o$.

Um nun die Regelverstärkung einzustellen, wird im Frequenzgenerator FG ein sinusförmiges Signal der Frequenz $f_o$ erzeugt und jeweils dem ersten Eingang des ersten und zweiten Synchrongleichrichters S1 und S2 zugeführt. Ausserdem wird dieses Signal der Führungsgröße W überlagert. Weil dem Eingang des ersten Synchrongleichrichters die Regelgröße x zugeführt wird, wird an seinem Ausgang derjenige Schwingungsanteil aus der Regelgröße x herausgefiltert, dessen Frequenz gleich der Frequenz $f_o$ ist. Ebenso wird am Ausgang des zweiten Synchrongleichrichters S2 derjenige Schwingungsanteil der Regeldifferenz $x_d$ herausgefiltert, dessen Frequenz gleich der Frequenz $f_o$ ist, weil dem zweiten Eingang des zweiten Synchrongleichrichters S2 die Regeldifferenz $x_d$ zugeführt wird. Im Vergleicher VL werden die augenblicklichen Amplituden der Schwingungsanteile der Regelgröße x und der Regeldifferenz $x_d$ miteinander verglichen. Die Steuer- und Kontrolleinheit C ändert nun so lange die Verstärkung des Reglers RG, bis der Vergleicher VL durch ein Signal an seinem Ausgang anzeigt, daß die herausgefilterten Schwingungsanteile mit der Frequenz $f_o$ der Regelgröße x und der Regeldifferenz $x_d$ gleich groß sind. Bei Gleichheit dieser beiden Größen beträgt die Regelverstärkung annähernd eins. Weil aber diese Einstellung bei der kritischen Frequenz $f_o$ vorgenommen wird, ist damit auch die Regelverstärkung annähernd auf den richtigen Wert eingestellt. Eine genaue Einstellung der Regelverstärkung liegt jedoch nicht vor, weil die Schwingungsanteile mit der Frequenz $f_o$ der Regelgröße x und der Regeldifferenz $x_d$ nicht in Phase sind, sondern um die Phasenreserve $\phi_o$ gegeneinander verschoben sind, wie in Figur 3c und d gezeigt ist.

Um eine genaue Einstellung der Regelverstärkung auf den Wert eins bei der Frequenz $f_o$ zu erzielen, sind die maximalen Amplituden der Schwingungsanteile der Frequenz $f_o$ der Regelgröße x und der Regeldifferenz $x_d$ miteinander zu vergleichen. Dies läßt sich dadurch erreichen, daß anstelle phasenabhängiger Synchrongleichrichter phasenunabhängige vorgesehen werden. An den Ausgängen der phasenunabhängigen Synchrongleichrichter ist die maximale Amplitude der Schwingungsanteile mit der Frequenz $f_o$ der Regelgröße x und der Regeldifferenz $x_d$ abnehmbar, so daß im Vergleicher VL die maximalen Amplituden miteinander verglichen werden. Dadurch wird die Regelverstärkung genau auf den Wert eins bei der Frequenz $f_o$ eingestellt.

Die Verwendung von phasenabhängigen Synchrongleichrichtern bringt jedoch den Vorteil, daß die Phasenreserve $\phi_o$ ständig überprüft werden kann. Wird sie zu klein - d.h. unterschreitet sie einen vorgebbaren Schwellwert -, so wird die Regelverstärkung verringert. Durch diese Maßnahme wird sichergestellt, daß die Stabilität des Regelkreises erhalten bleibt.

Anstelle der kritischen Frequenz $f_o$ kann auch eine andere Frequenz $f_1$ gewählt werden, vorausgesetzt man kennt die Schleifenverstärkung bei dieser Frequenz $f_1$. Beim Vergleich der Amplituden der Regelgröße x und der Regeldifferenz $x_d$ muß dann jedoch berücksichtigt werden, daß sich die Amplituden der Regelgröße x und der Regeldifferenz $x_d$ wegen der von eins verschiedenen Schleifenverstärkung um einen bestimmten Betrag unterscheiden. Bei der ausgewählten Frequenz $f_1$ möge die Schleifenverstärkung beispielsweise zwei betragen. Die Steuer- und Kontrolleinheit C ändert in diesem Fall solange die Verstärkung des Reglers RG, bis der Vergleicher VL durch ein Signal an seinem Ausgang anzeigt, daß die herausgefilterten Schwingungsanteile mit der Frequenz $f_1$ bei der Regelgröße x doppelt so groß sind wie bei der Regeldifferenz $x_d$. Prüft der Vergleicher VL dagegen wie zuvor auf Gleichheit, so ist entweder vor dem zweiten Eingang des ersten Synchrongleichrichters S1 ein Verstärker mit einer Verstärkung von 1/2 oder vor dem zweiten Eingang des zweiten Synchrongleichrichters S2 ein Verstärker mit einer Verstärkung von zwei vorzusehen.

Synchrongleichrichter und phasenunabhängige Synchrongleichrichter sind in U. Tietze, Ch. Schenk, Halbleiter-Schaltungstechnik, 7. überarbeitete Auflage, Springer-Verlag, 1985 auf Seite 797-802 beschrieben. Es wird daher nicht näher auf den Aufbau und die Funktion eines Synchrongleichrichters eingegangen.

Für viele Zwecke reicht es aus, einfache Synchrongleichrichter zu verwenden. In diesem Fall ist die Amplitude des vom Frequenzgenerator FG erzeugten sinusförmigen Signals der Frequenz $f_o$ größer zu wählen als bei Verwendung von phasenunabhängigen Synchrongleichrichtern. Die Einstellung der Regelverstärkung ist jederzeit, auch während des Regelbetriebs möglich. Die lästigen Neueinstellungen von Hand entfallen vollkommen. Drift der Paramter durch Alterung und durch Temperaturänderungen bei den elektronischen Bauteilen des Regelkreises werden automatisch kompensiert.

Es kann aber auch zur Einstellung der Verstärkung des Reglers RG die Führungsgröße W zu null gewählt werden und nur das vom Frequenzgenerator FG erzeugte sinusförmigen Signal als einzige "Führungsgröße" auf den ersten Eingang der Summationsstelle SU gegeben werden.

In Figur 2 ist eine Schaltungsanordnung gezeigt, wie sie in einem CD-Plattenspieler für den Fokus- oder Spurregelkreis eingesetzt werden kann. Bei dieser Schaltungsanordnung ist der Aufbau der Summationsstelle SU, des Reglers RG und der Regelstrecke RS dargestellt.

Der Ausgang des Frequenzgenerators FG ist mit dem nichtinvertierenden Eingang eines Operationsverstärkers OP1, der über einen Widerstand R1 auf Bezugspotential liegt, und mit dem ersten Eingang des ersten und des zweiten Synchrongleichrichters S1 und S2 verbunden. Der Ausgang des Operationsverstärkers OP1 ist auf dessen invertierenden Eingang rückgekoppelt und über einen Widerstand R2 mit dem invertierenden Eingang eines Operationsverstärkers OP2 verbunden. Der nichtinvertierende Eingang des Operationsverstärkers OP2 ist über einen Widerstand R3 mit dem Ausgang der Regelstrecke RS und dem zweiten Eingang des Synchrongleichrichters S1 verbunden. Ausserdem liegt er über einen Widerstand R4 auf Bezugspotential. Der Ausgang des Operationsverstärkers OP2, der über einen Widerstand R5 auf dessen invertierenden Eingang rückgekoppelt ist, ist mit dem Eingang des Reglers RG, der als PID-Regler mit anschließender Treiberschaltung T ausgeführt ist, und mit dem zweiten Eingang des Synchrongleichrichters S2 verbunden. Wie in Figur 1 ist der Ausgang des Reglers RG mit dem Eingang der Regelstrecke RS verbunden, die aus einem Stellglied, einem sogenannten Actuator A, einem als Meßfühler für die Ist-Größe dienenden Photodetektor PH und einem anschließenden Verstärker V aufgebaut ist. Der Ausgang des Synchrongleichrichters S1 ist mit dem ersten Eingang des Vergleichers VL verbunden, während der Ausgang des Synchrongleichrichters S2 mit dem zweiten Eingang des Vergleichers VL verbunden ist. Der Ausgang des Vergleichers VL ist mit dem Eingang der Steuer- und Kontrollschaltung C verbunden, deren Ausgang mit dem Eingang zur Einstellung der Verstärkung am P-Anteil des Reglers RG verbunden ist. Ein weiterer Ausgang der Steuer- und Kontrollschaltung C ist mit dem Steuereingang des Frequenzgenerators FG verbunden. Die Summationsstelle SU wird aus den Operationsverstärkern OP1 und OP2, dessen Verstärkung eins beträgt, sowie den Widerständen R1 bis R5 gebildet. Weil die Synchrongleichrichter S1 und S2 die Schwingungsanteile der Frequenz $f_o$ aus der Regelgröße x und der Regeldifferenz $x_d$ herausfiltern, werden im Vergleicher VL die Amplitude dieser beiden Anteile miteinander verglichen. Die Steuer-und Kontrollschaltung C ändert solange die Verstärkung am P-Anteil des Reglers RG, bis der Vergleicher VL durch ein Signal anzeigt, daß die Amplituden der Schwingungsanteile mit der Frequenz $f_o$ der Regelgröße x und der Regeldifferenz $x_d$ gleich groß sind. Sind die Amplituden gleich, so beträgt die Regelverstärkung eins, weil die Verstärkung des Operationsverstärkers OP2 zu eins gewählt wurde.

Amplitude und Frequenz des vom Frequenzgenerator FG erzeugten sinusförmigen Signales sind steuerbar, so daß für den Fokus- und den Spurregelkreis jeweils die kritische Frequenz $f_o$ von der Steuer- und Kontrollschaltung C eingestellt werden kann. Ausserdem kann die Amplitude des sinusförmigen Signals für phasenabhängige und phasenunabhängige Synchrongleichrichter eingestellt werden. Bei CD-Plattenspielern kann die Amplitude des vom Frequenzgenerator FG erzeugten Signals wesentlich größer gewählt werden, z.B. um den Faktor 10, wenn anstelle der Synchrongleichrichter Tief- oder Bandpässe mit anschliessenden Spitzenwertgleichrichtern zur Ausfilterung der Schwingungsanteile mit der Frequenz $f_o$ vorgesehen sind, ohne daß darunter die Wiedergabequalität des Gerätes leidet. Die Einstellung der Regelverstärkung ist sogar während des Spielbetriebes möglich. Bei einem Ausführungsbeispiel der Erfindung für CD-Plattenspieler ist vorgesehen, daß die Steuer- und Kontrollschaltung C die Einstellung der Regelverstärkung jeweils in den Pausen zwischen zwei auf der CD-Platte gespeicherten Musikstücken ausführt. Beim Einschalten des CD-Plattenspielers wird ebenfalls die Regelverstärkung jedesmal neu eingestellt.

Deshalb entfällt nicht nur die Einstellung der Regelverstärkung von Hand bei der Produktion, sondern auch spätere ebenfalls manuell auszuführende Korrekturen der Regelverstärkung werden überflüssig, weil Alterung der Bauteile, mit denen der Regelkreis ausgestattet ist, und Drift ihrer Parameter infolge Temperaturänderungen keine Rolle mehr spielen.

Die Operationsverstärker OP1 und OP2, der Frequenzgenerator FG, die Synchrongleichrichter S1 und S2, der Vergleicher VL und die Steuer- und Kontrollschaltung C lassen sich leicht integrieren. So ist z.B. der Baustein TDA 4940 von Siemens mit einem phasenunabhängigen Synchrongleichrichter und anschließendem Vergleicher ausgestattet. Am Anschluß 11 wird die Regelgröße x bzw. die Regeldifferenz $x_d$ angelegt, während die sinusförmige Schwingung der Frequenz $f_o$ intern mittels eines spannungsgesteuerten Oszillators erzeugt wird. Durch äußere Beschaltung des Bausteines TDA 4940 mit einem RC-Glied wird die Frequenz $f_o$ festgelegt. Der Baustein TDA 4940 ist im Siemens Datenbuch auf Seite 577 bis 581 beschrieben.

## Patentansprüche

1. Verfahren zur automatischen Einstellung der Regelverstärkung in einem Regelkreis, in dem der Führungsgröße W ein sinusförmiges Signal der Frequenz f überlagert wird, um ein Kriterium zur Einstellung der Regelverstärkung zu gewinnen, **dadurch gekennzeichnet, daß** die Amplituden der Regelgröße x und der Regeldifferenz $x_d$ miteinander verglichen werden und daß die Regelverstärkung so lange verändert wird, bis die Amplituden der Regelgröße x und der Regeldifferenz $x_d$ gleich groß sind.

2. Verfahren nach Anspruch 1, **dadurch gekennzeichnet, daß** zur Einstellung der Regelverstärkung die Führungsgröße W zu null gewählt wird, so daß nur das sinusförmige Signal der Frequenz f als Führungsgröße wirkt.

3. Verfahren nach Anspruch 1 oder 2, **dadurch gekennzeichnet, daß** die Frequenz f der sogenannten kritischen Frequenz $f_o$ des Regelkreises entspricht, bei der die Schleifenverstärkung eins beträgt.

4. Verfahren nach Anspruch 3, **dadurch gekennzeichnet, daß** die Regelverstärkung so lange verändert wird, bis die Amplituden der Regelgröße x und der Regeldifferenz $x_d$ gleich groß sind.

5. Schaltungsanordnung zur Durchführung des Verfahrens nach Anspruch 4, **dadurch gekennzeichnet, daß** der Ausgang eines Frequenzgenerators (FG) mit dem ersten Eingang eines ersten Synchrongleichrichters (S1), mit dem ersten Eingang eines zweiten Synchrongleichrichters (S2) und mit dem ersten Eingang der Summationsstelle (SU) des Regelkreises verbunden ist, dem die Führungsgröße W zugeführt wird, daß der Ausgang der Regelstrecke (RS) mit dem zweiten Eingang der Summationsstelle (SU) und des ersten Synchrongleichrichters (S1) verbunden ist, daß der Ausgang der Summationsstelle (SU) mit dem Eingang des Reglers (RG), dessen Ausgang mit dem Eingang der Regelstrecke (RS) verbunden ist, und mit dem zweiten Eingang des zweiten Synchrongleichrichters (S2) verbunden ist, daß der Ausgang des ersten Synchrongleichrichters (S1) mit dem ersten Eingang eines Vergleichers (VL) verbunden ist, daß der Ausgang des zweiten Synchrongleichrichters (S2) mit dem zweiten Eingang des Vergleichers (VL) verbunden ist, daß der Ausgang des Vergleichers (VL) mit dem Eingang einer Steuer- und Kontrollschaltung (C) verbunden ist und daß der Ausgang der Steuer- und Kontrollschaltung (C) mit dem Eingang zur Einstellung der Verstärkung am Regler (RG) verbunden ist.

6. Schaltungsanordnung nach Anspruch 5, **dadurch gekennzeichnet, daß** der Ausgang des Frequenzgenerators (FG) mit dem nichtinvertierenden Eingang eines ersten Operationsverstärkers (OP1) verbunden ist, der über einen ersten Widerstand (R1) auf Bezugspotential liegt, daß der Ausgang des ersten Operationsverstärkers (OP1) auf dessen invertierenden Eingang rückgekoppelt ist und über einen zweiten Widerstand (R2) mit dem invertierenden Eingang eines zweiten Operationsverstärkers (OP2) verbunden ist, daß der Ausgang der Regelstrecke (RS) und der zweite Eingang des ersten Synchrongleichrichters (S1) über einen dritten Widerstand (R3) mit dem nichtinvertierenden Eingang des zweiten Operationsverstärkers (OP2) verbunden ist, der über einen vierten Widerstand (R4) auf Bezugspotential liegt und daß der Ausgang des zweiten Operationsverstärkers (OP2), der über einen fünften Widerstand (R5) auf dessen invertierenden Eingang rückgekoppelt ist, mit dem Eingang des Reglers (RG) und dem zweiten Eingang des zweiten Synchrongleichrichters (S2) verbunden ist.

7. Schaltungsanordnung nach Anspruch 5 oder 6, **dadurch gekennzeichnet, daß** phasenunabhängige Synchrongleichrichter (S1, S2) vorgesehen sind.

8. Schaltungsanordnung nach Anspruch 5 oder 6, **dadurch gekennzeichnet, daß** phasenabhängige Synchrongleichrichter (S1, S2) vorgesehen sind, welche die Phasenreserve $\phi_o$ messen, und daß aus der gemessenen Phasenreserve $\phi_o$ ein weiteres Kriterium zur Einstellung der Regelverstärkung gewonnen wird.

9. Schaltungsanordnung nach Anspruch 8, **dadurch gekennzeichnet, daß** die Regelverstärkung verringert wird, wenn die gemessene Phasenreserve $\phi_o$ einen vorgebbaren Schwellwert unterschreitet.

10. Schaltungsanordnung nach Anspruch 5, 6, 7, 8 oder 9, **dadurch gekennzeichnet, daß** Amplitude und/oder Frequenz des vom Frequenzgenerator (FG) gelieferten sinusförmigen Signals veränderbar sind.

## Claims

1. Method for automatically setting the control loop gain in a control system in which the reference input W is Superimposed with a sine-wave signal of the frequency f in order to obtain a criterion for the setting of the control loop gain, characterised in that the amplitudes of the controlled variable x and the control difference $x_d$ are compared with one another and that the control loop gain is varied until such time as the amplitudes of the controlled variable x and the control difference $x_d$ are of equal value.

2. Method according to claim 1, characterised in that for the setting of the control loop gain the reference input W is selected as zero so that only the sine-wave signal of the frequency f acts as reference input.

3. Method according to claim 1 or 2, characterised in that the frequency f corresponds to the so-called critical frequency $f_0$ of the control system, at which the loop gain comes to one.

4. Method according to claim 3, characterised in that the control loop gain is varied until such time as the amplitudes of the controlled variable x and the control difference $x_d$ are of equal value.

5. Circuit arrangement for implementing the method according to claim 4, characterised in that the output of a frequency generator (FG) is connected to the first input of a first synchronous rectifier (S1), to the first input of a second synchronous rectifier (S2) and to the first input of the summation stage (SU) of the control system to which the reference input W is supplied, that the output of the controlled system (RS) is connected to the second input of the summation stage (SU) and of the first synchronous rectifier (S1), that the output of the summation stage (SU) is connected to the input of the controller (RG), whose output is connected to the input of the controlled system (RS), and to the second input of the second synchronous rectifier (S2), that the output of the first synchronous rectifier (S1) is connected to the first input of a comparator (VL), that the output of the second synchronous rectifier (S2) is connected to the second input of the comparator (VL), that the output of the comparator (VL) is connected to the input of a control and monitoring circuit (C) and that the output of the control and monitoring circuit (C) is connected to the input for setting the gain on the controller (RG).

6. Circuit arrangement according to claim 5, characterised in that the output of the frequency generator (FG) is connected to the non-inverting input of a first operational amplifier (OP1) which lies at reference potential across a first resistor (R1), that the output of the first operational amplifier (OPI) is fed back to its inverting input and is connected across a second resistor (R2) to the inverting input of a second operational amplifier (OP2), that the output of the controlled system (RS) and the second input of the first synchronous rectifier (S1) is connected across a third resistor (R3) to the non-inverting input of the second operational amplifier (OP2), which lies at reference potential across a fourth resistor (R4), and that the output of the second operational amplifier (OP2), which is fed back across a fifth resistor (R5) to its inverting input, is connected to the input of the controller (RG) and to the second input of the second synchronous rectifier (S2).

7. Circuit arrangement according to claim 5 or 6, characterised in that phase-independent synchronous rectifiers (S1, S2) are provided.

8. Circuit arrangement according to claim 5 or 6, characterised in that phase-dependent synchronous rectifiers (S1, S2) are provided, which measure the phase margin $\phi_0$, and that a further criterion for the setting of the control loop gain is derived from the measured phase margin $\phi_0$.

9. Circuit arrangement according to claim 8, characterised in that the control loop gain is reduced if the measured phase margin $\phi_0$ falls below a presettable threshold value.

10. Circuit arrangement according to claim 5, 6, 7, 8 or 9, characterised in that amplitude and/or frequency of the sine-wave signal supplied by the frequency generator (FG) are variable.

## Revendications

1. Procédé pour le réglage automatique de l'amplification de réglage dans un circuit de réglage dans lequel un signal sinusoïdal de fréquence f est superposé à la grandeur de référence W pour obtenir un critère pour régler l'amplification de réglage, **caractérisé en ce** que les amplitudes de la grandeur réglée x et de la différence de réglage x$_d$ sont comparées l'une à l'autre et que l'amplification de réglage est modifiée jusqu'à ce que les amplitudes de la grandeur réglée x et de la différence de réglage x$_d$ soient égales.

2. Procédé selon la revendication 1, **caractérisé en ce** que, pour le réglage de l'amplification de réglage, la grandeur de référence W est choisie comme étant zéro si bien que seul le signal sinusoïdal de fréquence f agit comme grandeur de référence.

3. Procédé selon la revendication 1 ou 2, **caractérisé en ce** que la fréquence f correspond à ce qu'il est convenu d'appeler la fréquence critique f$_o$ du circuit de réglage pour laquelle l'amplification de boucle est égale à un.

4. Procédé selon la revendication 4, **caractérisé en ce** que l'amplification de réglage est modifiée jusqu'à ce que les amplitudes de la grandeur réglée x et de la différence de réglage x$_d$ soient égales.

5. Dispositif de circuit pour réaliser le procédé selon la revendication 4, **caractérisé en ce** que la sortie d'un générateur de fréquence (FG) est reliée à la première entrée d'un premier redresseur de courant synchrone (S1), à la première entrée d'un second redresseur de courant synchrone (S2) et à la première entrée du totalisateur (SU) du circuit de réglage auquel est amenée la grandeur de référence W, que la sortie du circuit asservi (RS) est reliée à la seconde entrée du totalisateur (SU) et du premier redresseur de courant synchrone (S1), que la sortie du totalisateur (SU) est reliée à l'entrée du régulateur (RG), dont la sortie est reliée à l'entrée du circuit asservi (RS), et à la seconde entrée du second redresseur de courant synchrone (S2), que la sortie du premier redresseur de courant synchrone (S1) est reliée à la première entrée d'un comparateur (VL), que la sortie du second redresseur de courant synchrone (S2) est reliée à la seconde entrée du comparateur (VL), que la sortie du comparateur (VL) est reliée à l'entrée d'un circuit de commande et de contrôle (C) et que la sortie du circuit de commande et de contrôle (C) est reliée à l'entrée pour le réglage de l'amplification sur le régulateur (RG).

6. Dispositif de circuit selon la revendication 5, **caractérisé en ce** que la sortie du générateur de fréquence (FG) est reliée à l'entrée qui n'est pas inverseuse d'un premier amplificateur opérationnel (OP1) qui est mis sur le potentiel de référence par une première résistance (R1), que la sortie du premier amplificateur opérationnel (OP1) est réappliquée sur sa sortie inverseuse et est reliée par une deuxième résistance (R2) à l'entrée inverseuse d'un second amplificateur opérationnel (OP2), que la sortie du circuit asservi (RS) et la seconde entrée du premier redresseur de courant synchrone (S1) est reliée par une troisième résistance (R3) à l'entrée qui n'est pas inverseuse du second amplificateur opérationnel (OP2) qui est mis sur le potentiel de référence par une quatrième résistance (R4) et que la sortie du second amplificateur opérationnel (OP2), qui est réappliquée par une cinquième résistance (R5) sur son entrée inverseuse, est reliée à l'entrée du régulateur (R6) et à la seconde entrée du second redresseur de courant synchrone (S2).

7. Dispositif de circuit selon la revendication 5 ou 6, **caractérisé en ce** que des redresseurs de courant synchrones non sensibles à la phase (S1, S2) sont prévus.

8. Dispositif de circuit selon la revendication 5 ou 6, **caractérisé en ce** que des redresseurs de courant synchrones sensibles à la phase (S1, S2) sont prévus qui mesurent la réserve de phase ($\phi_o$) et que l'on obtient à partir de la réserve de phase mesurée $\phi_o$ un autre critère pour le réglage de l'amplification de réglage.

9. Dispositif de circuit selon la revendication 8, **caractérisé en ce** que l'amplification de réglage est réduite lorsque la réserve de phase mesurée $\phi_o$ n'atteint pas une valeur de seuil qui peut être prédéterminée.

10. Dispositif de circuit selon la revendication 5, 6, 7, 8 ou 9, **caractérisé en ce** que l'amplitude et/ou la fréquence du signal sinusoïdal livré par le générateur de fréquence peuvent être modifiées.

Fig.1

Fig.3

Fig. 2